# EUROPÄISCHE PATENTSCHRIFT

(11) **EP 4 594 134 B1**
(45) Veröffentlichungstag und Bekanntmachung des Hinweises auf die Patenterteilung: **01.07.2026**
(21) Anmeldenummer: 23742219.1
(22) Anmeldetag: 12.07.2023
(51) Int. Cl.: B60L 53/24, B60L 3/00, B60L 3/04, B60L 53/30, H01R 13/66, H01R 13/70, H01R 24/54

(54) **SCHALTVORRICHTUNG, UND SCHALTUNGSANORDNUNG ZUR KUPPLUNG UND LADEN EINES ENERGIESPEICHERS UND VERFAHREN ZUR ANSTEUERUNG EINES ELEKTROMECHANISCHEN SCHALTELEMENTS**
SWITCHING DEVICE, AND CIRCUIT ARRANGEMENT FOR COUPLING AND CHARGING AN ENERGY STORAGE DEVICE AND METHOD FOR CONTROLLING AN ELECTROMECHANICAL SWITCHING ELEMENT
DISPOSITIF DE COMMUTATION, ET CIRCUIT DE COUPLAGE ET DE CHARGE D'UN ACCUMULATEUR D'ÉNERGIE ET PROCÉDÉ DE COMMANDE D'UN ÉLÉMENT DE COMMUTATION ÉLECTROMÉCANIQUE

(30) Priorität: 29.09.2022 DE 102022210304
(43) Veröffentlichungstag der Anmeldung: 06.08.2025
(73) Patentinhaber: Robert Bosch GmbH, 70442 Stuttgart (DE)
(72) Erfinder: SHAABAN, Seifeldin Tarek Mohamed, 70469 Stuttgart (DE); KOLHATKAR, Yashomani Yashodhan, Bangalore 560066 (IN)
(86) Internationale Anmeldenummer: PCT/EP2023/069273
(87) Internationale Veröffentlichungsnummer: WO 2024/068072

(56) Entgegenhaltungen:
- EP-A1- 2 236 345
- US-A1- 2015 263 549
- US-A1- 2018 072 179
- US-A1- 2020 052 508

## Beschreibung

### Technisches Gebiet

Die vorliegende Erfindung betrifft eine Schaltvorrichtung zur Kopplung eines Ladeanschlusses mit einer Ladeschaltung und eine Schaltungsanordnung zum Aufladen eines elektrischen Energiespeichers mit einer solchen Schaltvorrichtung. Die Erfindung betrifft ferner ein Verfahren zur Ansteuerung eines elektromechanischen Schaltelements in einer solchen Ladeschaltung.

### Stand der Technik

Ganz oder zumindest teilweise elektrisch angetriebene Fahrzeuge verfügen in der Regel über ein elektrisches Antriebssystem, bei welchem elektrische Energie von einem Energiespeicher, wie beispielsweise einer Traktionsbatterie, mittels eines Stromrichters an einer elektrischen Maschine bereitgestellt wird. Der hierfür genutzte elektrische Energiespeicher kann mittels einer externen Energiequelle aufgeladen werden. Hierzu ist in der Regel eine separate Ladeschaltung erforderlich.

Darüber hinaus besteht auch die Möglichkeit, Komponenten des elektrischen Antriebssystems für das Aufladen des elektrischen Energiespeichers zu nutzen. Eine solche Anordnung ist beispielsweise in der Druckschrift DE 10 2018 207 188 A1 beschrieben.

Solange kein Aufladen der Traktionsbatterie erfolgt, wird eine Verbindung zwischen der Ladeschaltung und einem Ladeanschluss in der Regel mittels eines elektromechanischen Schaltelements wie zum Beispiel einem Relais oder Schütz getrennt.

US2015/263549A1 offenbart eine Schaltvorrichtung zur Kopplung eines Ladeanschlusses mit einer Lade- schaltung zum Aufladen eines elektrischen Energiespeichers.

### Offenbarung der Erfindung

Die vorliegende Erfindung schafft eine Schaltvorrichtung zur Kopplung eines Ladeanschlusses mit einer Ladeschaltung, eine Ladeschaltung und ein Verfahren zur Ansteuerung eines elektromechanischen Schaltelements mit den Merkmalen der unabhängigen Patentansprüche. Weitere vorteilhafte Ausführungsformen sind Gegenstand der abhängigen Patentansprüche.

Demgemäß ist vorgesehen:
Eine Schaltvorrichtung zur Kopplung eines Ladeanschlusses mit einer Ladeschaltung, insbesondere einer Ladeschaltung für einen elektrischen Energiespeicher. Die Schaltvorrichtung umfasst ein elektromechanisches Schaltelement, ein erstes Halbleiterschaltelement, ein zweites Halbleiterschaltelement und einen elektrischen Widerstand. Das elektromechanische Schaltelement ist in einem elektrischen Strompfad zwischen einem Anschlusspunkt des Ladeanschlusses und einem Anschlusspunkt der Ladeschaltung angeordnet. Hierbei ist das elektromechanische Schaltelement dazu ausgelegt, die elektrische Verbindung zwischen dem Ladeanschluss und der Ladeschaltung zu öffnen oder zu schließen. Das elektromechanische Schaltelement umfasst einen ersten Steueranschluss und einen zweiten Steueranschluss. Hierbei ist der erste Steueranschluss mit einem ersten Anschluss einer Versorgungsspannung gekoppelt. Das erste Halbleiterschaltelement ist zwischen einem zweiten Anschluss der Versorgungsspannung und dem zweiten Steueranschluss des elektromechanischen Schaltelements angeordnet ist. Ferner ist eine Serienschaltung aus dem zweiten Halbleiterschaltelement und dem elektrischen Widerstand zwischen dem zweiten Anschluss der Versorgungsspannung und dem zweiten Steueranschluss des elektromechanischen Schaltelements angeordnet.

Weiterhin ist vorgesehen:
Eine Schaltungsanordnung zum Aufladen eines elektrischen Energiespeichers in einem Elektrofahrzeug mit einem Ladeanschluss, einer Ladeschaltung und einer erfindungsgemäßen Schaltvorrichtung. Der Ladeanschluss ist dazu ausgelegt, mit einer elektrischen Energiequelle verbunden zu werden. Die Ladeschaltung ist dazu ausgelegt, unter Verwendung einer am Ladeanschluss bereitgestellten elektrischen Spannung einen elektrischen Energiespeicher aufzuladen. Das elektromechanische Schaltelement der Schaltvorrichtung ist zwischen einem Anschlusspunkt des Ladeanschlusses und der Ladeschaltung angeordnet.

Schließlich ist vorgesehen:
Ein Verfahren zur Ansteuerung eines elektromechanischen Schaltelements in einer erfindungsgemäßen Schaltvorrichtung. Das Verfahren umfasst einen Schritt zum Empfangen einer Anforderung zum Schließen des elektromechanischen Schaltelements. Ferner umfasst das Verfahren einen Schritt zum Ansteuern des ersten Halbleiterschaltelements oder des zweite Halbleiterschaltelements, nachdem eine Anforderung zum Schließen des elektromechanischen Schaltelemets empfangen worden ist.

### Vorteile der Erfindung

Zum Aufladen eines elektrischen Energiespeichers ist in der Regel ein elektromechanisches Schaltelement vorgesehen, welches eine elektrische Verbindung zwischen einem Ladeanschluss und der Ladeschaltung öffnen und schließen kann. Bei einem solchen elektromechanischen Schaltelement kann es sich beispielsweise um eine Relais oder einen Schütz handeln. Derartige elektromechanische Schaltelemente werden in der Regel durch Bestromen einer Spule angesteuert. Fließt ein elektrischer Strom durch diese Spule, so wird hierdurch ein Magnetfeld generiert, welches auf einen mechanischen Schaltkontakt einwirkt. Hierdurch kann der Schaltkontakt angesteuert und eine elektrische Verbindung geschlossen bzw. geöffnet werden.

Der vorliegenden Erfindung liegt hierbei die Erkenntnis zugrunde, dass ein elektrischer Widerstand der Spule in einem elektromechanischen Schaltelement beispielsweise in Abhängigkeit von Umgebungsbedingungen wie Temperatur oder ähnlichem variieren kann. Somit kann bei einem relativ geringen elektrischen Widerstand der Spule ein verhältnismäßig hoher elektrischer Strom fließen. Daher sind geeignete Maßnahmen erforderlich, um den elektrischen Strom beim Ansteuern des elektromechanischen Schaltelements zu begrenzen.

Es ist daher eine Idee der vorliegenden Erfindung, dieser Erkenntnis Rechnung zu tragen und eine Schaltvorrichtung zur Kopplung des Ladeanschlusses mit einer Ladeschaltung zu schaffen, bei welcher der elektrische Strom zum Ansteuern des elektromechanischen Schaltelement zwischen Ladeschaltung und Ladeanschluss auf einfache Weise angepasst werden kann.

Hierzu ist es erfindungsgemäß vorgesehen, zur Ansteuerung des elektromechanischen Schaltelements zwei parallele Pfade vorzusehen. In einem ersten Strompfad zum Ansteuern des elektromechanischen Schaltelements ist ein erstes Halbleiterschaltelement vorgesehen, welches den Steueranschluss des elektromechanischen Schaltelements direkt mit einer Spannungsversorgung verbinden kann. In einem weiteren Strompfad ist es ferner eine Serienschaltung aus einem zweiten Halbleiterschaltelement mit einem elektrischen Widerstand vorgesehen. Somit kann beim Ansteuern des zweiten Halbleiterschaltelements durch diesen Widerstand der elektrische Strom zur Ansteuerung des elektromechanischen Schaltelements auf einfache Weise begrenzt werden.

Soll nun das elektromechanische Schaltelement angesteuert werden, so kann in Abhängigkeit von Betriebs- und/oder Umgebungsbedingungen das elektromechanische Schaltelement entweder direkt über das erste Halbleiterschaltelement oder über das zweite Halbleiterschaltelement und den in Serie geschalteten elektrischen Widerstand mit einer Spannungsversorgung verbunden werden. Auf diese Weise kann sichergestellt werden, dass bei ungünstigen Betriebs- und/oder Umgebungsbedingungen der elektrische Strom zur Ansteuerung des elektromechanischen Schaltelements keinen unzulässig hohen Wert erreicht oder überschreitet.

Die Entscheidung, ob das elektromechanische Schaltelement über den Strompfad mit dem ersten Halbleiterschaltelement oder den Strompfad mit dem zweiten Halbleiterschaltelement angesteuert werden soll, kann beispielsweise zu einem Zeitpunkt getroffen werden, wenn das elektromechanische Schaltelement angesteuert werden soll. Darüber hinaus können auch während des Zeitraums, in welchem das elektromechanische Schaltelement angesteuert werden soll, kontinuierlich bzw. in vorgegebenen Zeitintervallen die Betriebs- und/oder Umgebungsbedingungen überprüft werden und daraufhin die Ansteuerung des elektromechanischen Schaltelements angepasst werden. Soll dabei zwischen dem Strompfad mit dem ersten Halbleiterschaltelement und dem Strompfad mit dem zweiten Halbleiterschaltelement gewechselt werden, so können vorzugsweise zunächst für eine kurze Zeitspanne beide Halbleiterschaltelement angesteuert werden. Anschließend kann eines der Halbleiterschaltelement geöffnet werden, sodass der elektrische Strom nur durch einen der beiden Strompfad fließt. Auf diese Weise kann sichergestellt werden, dass das elektromechanische Schaltelement bei einem Wechsel der Strompfade mit dem ersten Halbleiterschaltelement bzw. dem zweiten Halbleiterschaltelement kontinuierlich angesteuert bleibt.

Gemäß einer Ausführungsform umfasst die Schaltvorrichtung zur Kopplung des Ladeanschlusses mit der Ladeschaltung eine Steuereinrichtung. Die Steuereinrichtung ist dazu ausgelegt, eine Anforderung für das Schließen des elektromechanischen Schaltelements zu empfangen. Ferner ist die Steuereinrichtung dazu ausgelegt, zum Schließen des elektromechanischen Schaltelements das erste Halbleiterschaltelement oder das zweite Halbleiterschaltelement anzusteuern. Wie oben bereits ausgeführt, erfolgt das Ansteuern des elektromechanischen Schaltelements entweder über den Strompfad mit dem ersten Halbleiterschaltelement oder den Strompfad mit dem zweiten Halbleiterschaltelement und dem in Serie geschalteten elektrischen Widerstand. Durch die Auswahl des geeigneten Strompfads kann gewährleistet werden, dass der elektrische Strom zur Ansteuerung des elektromechanischen Schaltelements keinen unzulässig hohen Wert annimmt, aber andererseits stets eine zuverlässige Ansteuerung des elektromechanischen Schaltelement erfolgen kann.

Gemäß einer Ausführungsform ist die Steuereinrichtung dazu ausgelegt, eine Temperatur an dem elektromechanischen Schaltelement und/oder der Ladeschaltung zu ermitteln. Die Steuereinrichtung kann hierbei unter Verwendung der ermittelten Temperatur entweder das erste Halbleiterschaltelement oder das zweite Schaltelement ansteuern. Auf diese Weise kann der Eigenschaft Rechnung getragen werden, dass ein elektrischer Widerstand in dem Ansteuerpfad des elektromechanischen Schaltelements, beispielsweise aufgrund eines temperaturabhängigen elektrischen Widerstands einer Spule, in Abhängigkeit der Temperatur schwanken kann. Somit kann einerseits gewährleistet werden, dass stets ein ausreichend hoher elektrischer Strom für ein sicheres Ansteuern des elektromechanischen Schaltelements bereitgestellt werden kann, aber andererseits der elektrische Strom keine unzulässig hohen Werte erreicht.

Gemäß einer Ausführungsform ist die Steuereinrichtung dazu ausgelegt, einen elektrischen Strom zum Ansteuern des elektromechanischen Schaltelements zu ermitteln. Entsprechend kann die Steuereinrichtung unter Verwendung des ermittelten elektrischen Stroms entweder das erste Halbleiterschaltelement oder das zweite Schaltelement ansteuern. Der elektrische Strom kann beispielsweise mittels eines Stromsensors in dem Strompfad zum Ansteuerung des Halbleiterschaltelements ermittelt werden.

Gemäß einer Ausführungsform umfasst die Schaltvorrichtung ein elektrisches Schutzelement. Das Schutzelement kann in dem Strompfad zwischen dem ersten Steueranschluss des elektromechanischen Schaltelements und dem ersten Anschluss einer Versorgungsspannung angeordnet sein. Beispielweise kann es sich bei dem Schutzelement um eine elektrische und/oder elektronische Überstromsicherung handeln. Auf diese Weise kann der Strompfad zur Ansteuerung des elektromechanischen Schaltelements vor Überlastung gesichert werden

Gemäß einer Ausführungsform der Schaltungsanordnung zum Aufladen des elektrischen Energiespeichers umfasst die Ladeschaltung eine elektrische Maschine und eine Ansteuerschaltung für die elektrische Maschine. Hierbei kann das elektromechanische Schaltelement der Schaltvorrichtung zwischen einem Anschlusspunkt des Ladeanschlusses und einem Sternpunkt der elektrischen Maschine angeordnet sein. Auf diese Weise können die Komponenten eines solchen elektrischen Antriebssystems aus elektrischer Maschine und Ansteuerschaltung für die Spannungswandlung der am Ladeanschluss bereitgestellten elektrischen Spannung in eine Spannung zum Aufladen des elektrischen Energiespeichers genutzt werden. Insbesondere kann beispielsweise eine am Ladeanschluss bereitgestellte Gleichspannung in eine Gleichspannung konvertiert werden, die zum Aufladen des Energiespeichers geeignet ist.

Gemäß einer Ausführungsform ist der Ladeanschluss dazu ausgelegt ist, mit einer elektrischen Gleichspannungsquelle verbunden zu werden. Gleichspannungsquellen werden sehr häufig für Schnellladevorgänge von elektrischen Energiespeichern in Elektrofahrzeugen eingesetzt.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann auch Einzelaspekte als Verbesserungen oder Ergänzungen zu den jeweiligen Grundformen der Erfindung hinzufügen.

### Kurze Beschreibung der Zeichnungen

Weitere Merkmale und Vorteile der Erfindung werden nachfolgend anhand der Figuren erläutert. Dabei zeigen:
- Fig. 1:: ein Prinzipschaltbild einer Schaltungsanordnung zum Aufladen eines elektrischen Energiespeichers gemäß einer Ausführungsform;
- Fig. 2:: ein Prinzipschaltbild einer Schaltungsanordnung zum Aufladen eines elektrischen Energiespeichers gemäß einer weiteren Ausführungsform; und
- Fig. 3:: ein Ablaufdiagramm, wie es einem Verfahren gemäß einer Ausführungsform zugrunde liegt.

### Beschreibung von Ausführungsformen

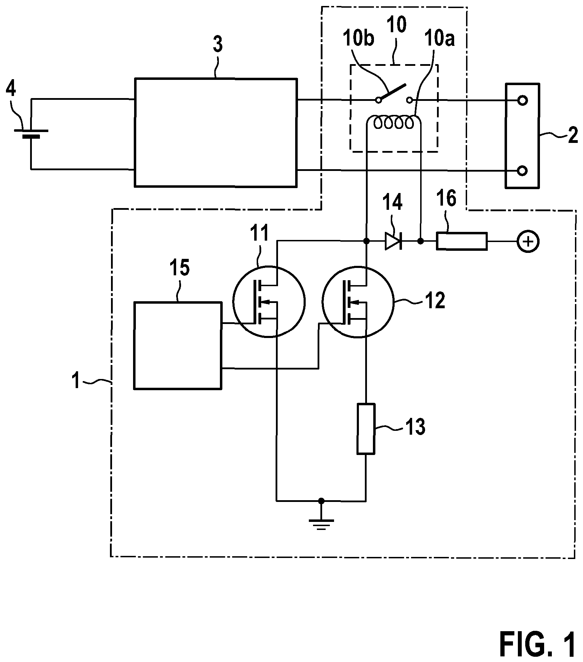

Figur 1 zeigt ein Prinzipschaltbild einer Schaltungsanordnung zum Aufladen eines elektrischen Energiespeichers 4 gemäß einer Ausführungsform. Bei den elektrischen Energiespeicher 4 kann es sich beispielsweise um eine Traktionsbatterie eines Elektrofahrzeuges handeln. Die Schaltungsanordnung umfasst einen Ladeanschluss 2, an welchem elektrische Energie zum Aufladen des Energiespeichers 4 bereitgestellt werden kann. Beispielsweise kann es sich hierbei um den Ladeanschluss an einem Elektrofahrzeug handeln. Insbesondere kann an diesem Ladeanschluss 2 eine elektrische Gleichspannung von einer Schnellladestation für Elektrofahrzeuge oder ähnlichem bereitgestellt werden. Ferner umfasst die Schaltungsanordnung eine Ladeschaltung 3. Diese Ladeschaltung 3 kann beispielsweise die am Ladeanschluss 2 bereitgestellte elektrische Spannung in eine Gleichspannung konvertieren, die dazu geeignet ist, den elektrischen Energiespeicher 4 aufzuladen. Wird an dem Ladeanschluss 2 eine Gleichspannung bereitgestellt, so kann die Ladeschaltung 3 beispielsweise als Gleichspannungswandler arbeiten, der beispielsweise die Spannungshöhe der am Ladeanschluss 2 bereitgestellten Gleichspannung derart anpasst, dass sie zum Aufladen des elektrischen Energiespeichers 4 geeignet ist. Wie nachfolgend noch näher erläutert, kann dies auch beispielsweise mittels Komponenten eines elektrischen Antriebssystems erfolgen.

Zwischen mindestens einem Anschlusspunkt des Ladeanschlusses 2 und der Ladeschaltung 3 ist eine Schaltvorrichtung 1 mit einem elektromechanischen Schaltelement 10 vorgesehen. Dieses elektromechanische Schaltelement 10 kann den entsprechenden Anschlusspunkt am Ladeanschluss 2 mit der Ladeschaltung 3 während des Ladevorgangs verbinden. Ferner kann das elektromechanische Schaltelement 10 die Verbindung zwischen dem Ladeanschluss 2 und der Ladeschaltung 3 unterbrechen, wenn kein Ladevorgang stattfindet. Auf diese Weise kann beispielsweise sichergestellt werden, dass keine gefährliche elektrische Spannung am Ladeanschluss 2 anliegt, solange kein Ladevorgang erfolgt.

Bei dem elektromechanischen Schaltelement 10 kann es sich beispielsweise um ein Relais oder Schütz handeln. Bei einem solchen elektromechanischen Schaltelement 10 kann beispielsweise eine Spule 10a vorgesehen sein, die ein Magnetfeld erzeugt, wenn ein elektrischer Strom durch diese Spule 10a fließt. Dieses Magnetfeld kann einen Schaltkontakt 10b betätigen, um eine elektrische Verbindung zu öffnen oder zu schließen. In dem vorliegenden Beispiel kann hierdurch beispielsweise durch den Schaltkontakt 10b die elektrische Verbindung zwischen dem Ladeanschluss 2 und der Ladeschaltung 3 geöffnet bzw. unterbrochen werden.

Liegt an der Spule 10a des elektromechanischen Schaltelements 10 eine konstante Spannung an, so variiert der elektrische Strom durch die Spule 10a in Abhängigkeit von dem elektrischen Widerstand der Spule 10a. Hierbei kann der elektrische Widerstand der Spule 10a beispielsweise von verschiedenen Parametern, wie beispielsweise der Temperatur der Spulenwicklung abhängen.

Wie in Figur 1 dargestellt, ist die Spule 10a an einem Anschlusspunkt mit einem Anschluss einer Versorgungsspannung, z.B. dem positiven Anschluss der Versorgungsspannung, gekoppelt. Beispielsweise kann die Ansteuerung des elektromechanischen Schaltelements 10, insbesondere der Spule 10a über ein Niedervoltbordnetz eines Fahrzeugst, z.B. einen sogenannten Klemme 30 Anschluss mit elektrischer Energie versorgt werden.

Parallel zu der Spule 10a kann eine sogenannte Freilaufdiode 14 vorgesehen sein. Hierdurch können Spannungsüberhöhungen insbesondere beim Abschalten des Stroms durch die Spule 10a reduziert werden. Ferner kann beispielsweise zwischen diesem Anschlusspunkt der Spule 10a und dem positiven Anschluss der Versorgungsspannung ein Schutzelement 16 vorgesehen sein. Bei diesem Schutzelement 16 kann sich beispielsweise um eine elektrische oder elektronische Sicherung handeln, welche zum Beispiel beim Überschreiten eines maximalen Stroms die elektrische Verbindung unterbricht.

Ferner ist zwischen dem zweiten Anschlusspunkt der Spule 10a und einem weiteren Anschluss der Versorgungsspannung, beispielsweise dem negativen Anschluss der Versorgungsspannung, ein erstes Halbleiterschaltelement 11 vorgesehen. Parallel zu diesem ersten Halbleiterschaltelement 11 ist zwischen dem zweiten Anschlusspunkt der Spule 10a und dem zweiten Anschluss der Versorgungsspannung eine Serienschaltung aus einem zweiten Halbleiterschaltelement 12 und einem elektrischen Widerstand 13 vorgesehen.

Durch eine solche Schaltung kann die Spule 10a bestromt werden, wenn das erste Halbleiterschaltelement 11 oder das zweite Halbleiterschaltelement 12 geschlossen wird. Wird das erste Halbleiterschaltelement 11 geschlossen, so liegt annähernd die gesamte Versorgungsspannung zwischen den beiden Anschlusspunkten der Spule 10a an. Wird alternativ das zweite Halbleiterschaltelement 12 geschlossen, während das erste Halbleiterschaltelement 11 geöffnet ist, so liegt aufgrund des in Serie geschalteten elektrischen Widerstands 13 eine geringere elektrische Spannung zwischen den beiden Anschlusspunkten der Spule 10a an.

Das Ansteuern des ersten Halbleiterschaltelements 11 sowie des zweiten Halbleiterschaltelements 12 erfolgt beispielsweise mittels einer Steuereinrichtung 15. Insbesondere kann diese Steuereinrichtung 15 auch entscheiden, ob das erste Halbleiterschaltelement 11 oder das zweite Halbleiterschaltelement 12 zum Ansteuern des elektromechanischen Schaltelements 10 geschlossen werden soll. Hierzu kann die Steuereinrichtung 15 verschiedene Betriebs- und/oder Umgebungsbedingungen berücksichtigen.

Beispielsweise kann ein elektrischer Strom in dem Strompfad zum Bestromen der Spule 10a ermittelt werden und in Abhängigkeit dieses elektrischen Stroms entweder das erste Halbleiterschaltelement 11 oder das zweite Halbleiterschaltelement 12 angesteuert werden. Hierzu kann beispielsweise ein Stromsensor (nicht dargestellt) in dem Strompfad mit der Spule 10a vorgesehen sein. Wird beispielsweise die Spule 10a über den Strompfad mit dem zweiten Halbleiterschaltelement 12 und dem elektrischen Widerstands 13 bestromt und unterschreitet der elektrische Strom in diesem Strompfad einen vorgegebenen Grenzwert, so kann das erste Halbleiterschaltelement 11 geschlossen werden. Anschließend kann das zweite Halbleiterschaltelement 12 geöffnet werden. Auf diese Weise kann gewährleistet werden, dass ein ausreichend hoher elektrischer Strom durch die Spule 10a fließt, um ein Magnetfeld zu erzeugen, welches den Schaltkontakt 10b sicher ansteuert.

Ferner kann, falls das erste Halbleiterschaltelement 11 geschlossen ist und der elektrische Strom durch die Spule 10a einen vorgegebenen Schwellwert überschreitet, dass zweite Halbleiterschaltelement 12 geschlossen werden und daraufhin das erste Halbleiterschaltelement 11 geöffnet werden. Auf diese Weise verringert sich der elektrische Strom durch die Spule 10a, sodass ein zu hoher elektrischer Strom durch die Spule 10a vermieden werden kann. Somit kann eine längerfristige übermäßige Belastung der Spannungsquelle, welche die elektrische Energie zum Bestromen der Spule 10a bereitstellt vermieden werden.

Dadurch, dass bei einem Wechsel zwischen dem Ansteuern des ersten Halbleiterschaltelements 11 und des zweiten Halbleiterschaltelements 12 jeweils zunächst für eine kurze Zeitspanne beide Halbleiterschaltelemente 11 und 12 angesteuert werden, kann vermieden werden, dass der Schaltkontakt 10b kurzzeitig abfällt und somit der Ladevorgang unterbrochen würde.

Neben der Berücksichtigung des elektrischen Stroms durch die Spule 10a können zusätzlich oder alternativ auch weitere Betriebs- und/oder Umgebungsparameter berücksichtigt werden. Da der elektrische Widerstand der Spule 10a beispielsweise auch mit der Temperatur schwanken kann, kann die Entscheidung, ob die Spule 10a über den Strompfad mit dem ersten Halbleiterschaltelement 11 oder den Strompfad mit dem zweiten Halbleiterschaltelement 12 und dem elektrischen Widerstands 13 bestromt wird, auch in Abhängigkeit einer Umgebungstemperatur bzw. einer Temperatur an dem elektromechanischen Schaltelement 10 getroffen werden. Beispielsweise kann bei Temperaturen unterhalb eines vorgegebenen Schwellwerts das Bestromen der Spule 10a über den Strompfad mit dem zweiten Halbleiterschaltelement 12 und dem elektrischen Widerstand 13 erfolgen. Oberhalb des vorgegebenen Schwellwerts kann die Spule 10a durch Ansteuern des ersten Halbleiterschaltelement 11 angesteuert werden.

Darüber hinaus sind selbst verständlich auch beliebige andere geeignete Betriebs- und/oder Umgebungsbedingungen sowie Kombinationen aus mehreren Betriebs- und/oder Umgebungsbedingungen für die Auswahl des anzusteuernden Halbleiterschaltelements 11 oder 12 möglich.

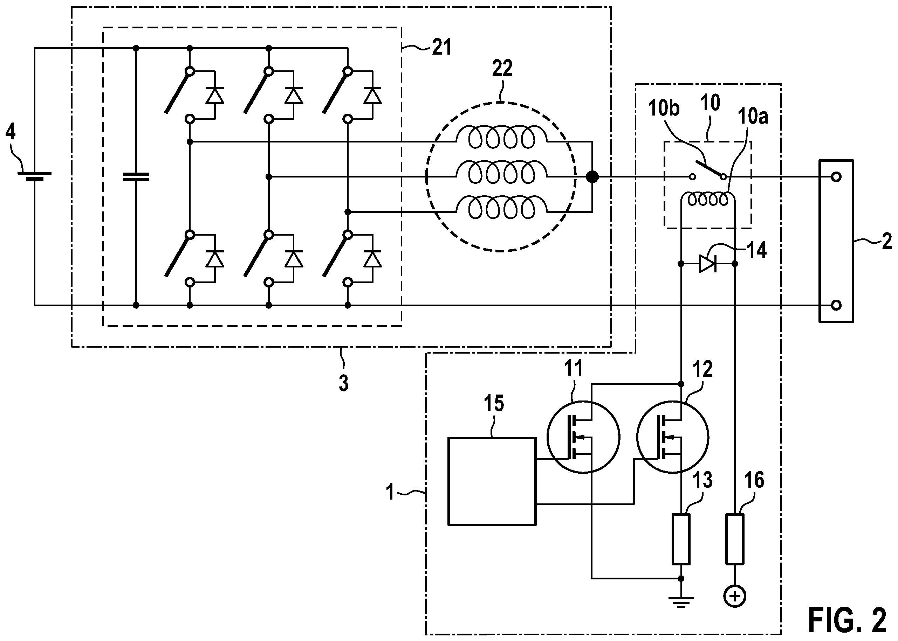

Figur 2 zeigt ein Prinzipschaltbild einer Schaltungsanordnung zum Aufladen eines elektrischen Energiespeichers 4 gemäß einer weiteren Ausführungsform. Hierbei gelten, soweit anwendbar, sämtliche zuvor bereit Zusammenhang mit Figur 1 gemachten Ausführungen.

Wie in Figur 2 zu erkennen ist, kann die Ladeschaltung 2 beispielsweise Komponenten eines elektrischen Antriebssystems umfassen. Insbesondere kann die Ladeschaltung 2 beispielsweise einen elektrischen Stromrichter 21 und eine elektrische Maschine 22 umfassen. Hierbei kann der Stromrichter 21 dazu ausgelegt sein, in einem ersten Betriebsmodus die elektrische Maschine 22 unter Verwendung der von einer elektrischen Energiequelle bereitgestellten elektrischen Energie die elektrische Maschine 22 anzusteuern. Ferner kann der Stromrichter 21 in diesem Betriebsmodus auch elektrische Energie, die von der elektrischen Maschine 22 in einem Generatorbetrieb bereitgestellt wird, zu konvertieren und diese zum Aufladen des elektrischen Energiespeichers 4 an diesem bereitzustellen.

In einem weiteren Betriebsmodus kann der Stromrichter 21 derart betrieben werden, dass er unter Verwendung der Induktivitäten der elektrischen Maschine 22 eine am Ladeanschluss 2 bereitgestellte elektrische Spannung in eine Spannung konvertiert, die dazu geeignet ist, den elektrischen Energiespeicher 4 aufzuladen. Insbesondere kann hierbei eine am Ladeanschluss 2 bereitgestellte elektrische Gleichspannung in eine Gleichspannung konvertiert werden, die dazu geeignet ist, den elektrischen Energiespeicher 4 aufzuladen. Das Grundprinzip einer derartigen Spannungswandlung durch Komponenten eines elektrischen Antriebssystems wird als bekannt vorausgesetzt und daher hier nicht näher erläutert.

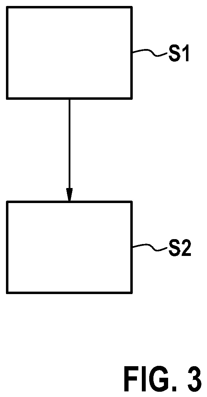

Figur 3 zeigt ein Ablaufdiagramm, wie es einem Verfahren zur Ansteuerung einer erfindungsgemäßen Schaltvorrichtung 1, insbesondere des elektromechanischen Schaltelements 10 in der Schaltvorrichtung 1 zugrunde liegt. Das Verfahren kann grundsätzlich beliebige Schritte umfassen, wie sie bereits zuvor in Zusammenhang mit den Figuren 1 und 2 erläutert worden sind. Analog kann die zuvor beschriebenen Schaltvorrichtung 1 bzw. die Schaltungsanordnung mit dieser Schaltvorrichtung 1 beliebige geeignete Komponenten umfassen, die zur Implementierung des nachfolgend beschriebenen Verfahrens geeignet bzw. erforderlich sind.

In Schritt S1 wird eine Anforderung zum Schließen des elektromechanischen Schaltelements 10 empfangen. Daraufhin wird in Schritt S2 entweder das erste Halbleiterschaltelement 11 oder das zweite Halbleiterschaltelement 12 angesteuert, um die Spule 10a zu bestromen. Für die Entscheidung, ob das erste Halbleiterschaltelement 11 oder das zweite Halbleiterschaltelement 12 angesteuert werden soll, können beliebige geeignete Betriebs- und/oder Umgebung Bedingungen, wie beispielsweise Temperatur an dem elektromechanischen Schaltelement 10 oder einer anderen geeigneten Position sowie ein elektrischer Strom durch die Spule 10a, in Betracht gezogen werden.

Soll nach einem Schließen des Schaltkontakts 10b in dem elektromechanischen Schaltelement 10 beispielsweise aufgrund von geänderten Bedingungen zwischen einer Ansteuerung des ersten Halbleiterschaltelements 11 und dem zweiten Halbleiterschaltelement 12 gewechselt werden, so werden zunächst kurzzeitig beide Halbleiterschaltelemente 11, 12 angesteuert. Anschließend kann eines der beiden Halbleiterschaltelement 11 oder 12 geöffnet werden. Auf diese Weise kann sichergestellt werden, dass der Schaltkontakt 10b während des Wechsels kontinuierlich geschlossen bleibt.

Zusammenfassend betrifft die vorliegende Erfindung das Ansteuern eines elektromechanischen Schaltelements zwischen einem Ladeanschluss und einer Ladeschaltung. Hierzu sind zwei alternative Strompfade zum Ansteuern des elektromechanischen Schaltelements vorgesehen, wobei in einem der beiden Strompfade ein zusätzlicher elektrischer Widerstand vorgesehen ist, um den elektrischen Strom zur Ansteuerung des Schaltelements zu begrenzen.

## Patentansprüche

1. Schaltvorrichtung (1) zur Kopplung eines Ladeanschlusses (2) mit einer Ladeschaltung (3) zum Aufladen eines elektrischen Energiespeichers (4), mit:
einem elektromechanischen Schaltelement (10), das dazu ausgelegt ist, einen elektrischen Strompfad zwischen einem Anschlusspunkt des Ladeanschlusses (2) und einem Anschlusspunkt der Ladeschaltung (3) zu öffnen oder zu schließen;
einem ersten Halbleiterschaltelement (11);
einem zweiten Halbleiterschaltelement (12); und
einem elektrischen Widerstand (13),
wobei das elektromechanische Schaltelement (10) einen ersten Steueranschluss und einen zweiten Steueranschluss umfasst, und wobei der erste Steueranschluss mit einem ersten Anschluss einer Versorgungsspannung gekoppelt ist,
wobei das erste Halbleiterschaltelement (11) zwischen einem zweiten Anschluss der Versorgungsspannung und dem zweiten Steueranschluss des elektromechanischen Schaltelements (10) angeordnet ist, und
wobei eine Serienschaltung aus dem zweiten Halbleiterschaltelement (12) und dem elektrischen Widerstand (13) zwischen dem zweiten Anschluss der Versorgungsspannung und dem zweiten Steueranschluss des elektromechanischen Schaltelements (10) angeordnet ist.

2. Schaltvorrichtung (1) nach Anspruch 1, mit einer Steuereinrichtung (15), die dazu ausgelegt ist, eine Anforderung für das Schließen des elektromechanischen Schaltelements (10) zu empfangen und zum Schließen des elektromechanischen Schaltelements (10) das erste Halbleiterschaltelement (11) oder das zweite Halbleiterschaltelement (12) anzusteuern.

3. Schaltvorrichtung (1) nach Anspruch 2, wobei die Steuereinrichtung (15) dazu ausgelegt ist, eine Temperatur an dem elektromechanischen Schaltelement (10) und/oder der Ladeschaltung (3) zu ermitteln und unter Verwendung der ermittelten Temperatur entweder das erste Halbleiterschaltelement (11) oder das zweite Schaltelement (12) anzusteuern.

4. Schaltvorrichtung (1) nach Anspruch 2 oder 3, wobei die Steuereinrichtung (15) dazu ausgelegt ist, einen elektrischen Strom zum Ansteuern des elektromechanischen Schaltelements (10) zu ermitteln und unter Verwendung des ermittelten elektrischen Stroms entweder das erste Halbleiterschaltelement (11) oder das zweite Halbleiterschaltelement (12) anzusteuern.

5. Schaltvorrichtung (1) nach einem der Ansprüche 1 bis 4, mit einem elektrischen Schutzelement (16), das in einem Strompfad zwischen dem ersten Steueranschluss des elektromechanischen Schaltelements (10) und dem ersten Anschluss einer Versorgungsspannung angeordnet ist.

6. Schaltungsanordnung zum Aufladen eines elektrischen Energiespeichers (4) in einem Elektrofahrzeug, mit:
einem Ladeanschluss (2), der dazu ausgelegt ist, mit einer elektrischen Energiequelle verbunden zu werden;
einer Ladeschaltung (3), die dazu ausgelegt ist, unter Verwendung einer am Ladeanschluss (2) bereitgestellten elektrischen Spannung den elektrischen Energiespeicher (4) aufzuladen;
einer Schaltvorrichtung nach einem der Ansprüche 1 bis 5,
wobei das elektromechanische Schaltelement (10) der Schaltvorrichtung (1) zwischen einem Anschlusspunkt des Ladeanschlusses (2) und der Ladeschaltung (3) angeordnet ist.

7. Schaltungsanordnung nach Anspruch 6, wobei die Ladeschaltung (2) eine elektrische Maschine (22) und eine Ansteuerschaltung (21) für die elektrische Maschine (2) umfasst;
und wobei das elektromechanische Schaltelement (10) der Schaltvorrichtung (1) zwischen einem Anschlusspunkt des Ladeanschlusses (2) und einem Sternpunkt der elektrischen Maschine (22) angeordnet ist.

8. Schaltungsanordnung nach Anspruch 6 oder 7, wobei der Ladeanschluss (2) dazu ausgelegt ist, mit einer elektrischen Gleichspannungsquelle verbunden zu werden.

9. Verfahren zur Ansteuerung eines elektromechanischen Schaltelements (10) in einer Schaltvorrichtung (1) nach Anspruch 1, mit den Schritten:
Empfangen (S1) einer Anforderung zum Schließen des elektromechanischen Schaltelements (10); und
Ansteuern (S2) des ersten Halbleiterschaltelements (11) oder des zweite Halbleiterschaltelements (12), nachdem eine Anforderung zum Schließen des elektromechanischen Schaltelemets (10) empfangen worden ist.

10. Verfahren nach Anspruch 9, wobei eine Auswahl, ob das erste Halbleiterschaltelement (11) oder das zweite Halbleiterschaltelement (12) angesteuert werden soll unter Verwendung eines elektrischen Stroms zum Ansteuern des elektromechanischen Schaltelements (10) und/oder einer Temperatur an dem elektromechanischen Schaltelement (10) und/oder der Ladeschaltung (2) erfolgt.

## Claims

1. Switching device (1) for coupling a charging connection (2) to a charging circuit (3) for charging an electrical energy storage device (4), comprising:
an electromechanical switching element (10) designed to open or close an electrical current path between a connection point of the charging connection (2) and a connection point of the charging circuit (3);
a first semiconductor switching element (11);
a second semiconductor switching element (12); and
an electrical resistor (13),
wherein the electromechanical switching element (10) comprises a first control connection and a second control connection, and wherein the first control connection is coupled to a first connection of a supply voltage,
wherein the first semiconductor switching element (11) is arranged between a second connection of the supply voltage and the second control connection of the electromechanical switching element (10), and
wherein a series circuit consisting of the second semiconductor switching element (12) and the electrical resistor (13) is arranged between the second connection of the supply voltage and the second control connection of the electromechanical switching element (10).

2. Switching device (1) according to Claim 1, comprising a control device (15) designed to receive a request to close the electromechanical switching element (10) and, in order to close the electromechanical switching element (10), to actuate the first semiconductor switching element (11) or the second semiconductor switching element (12).

3. Switching device (1) according to Claim 2, wherein the control device (15) is designed to determine a temperature at the electromechanical switching element (10) and/or the charging circuit (3) and to actuate either the first semiconductor switching element (11) or the second switching element (12) using the determined temperature.

4. Switching device (1) according to Claim 2 or 3, wherein the control device (15) is designed to determine an electric current for actuating the electromechanical switching element (10) and to actuate either the first semiconductor switching element (11) or the second semiconductor switching element (12) using the determined electric current.

5. Switching device (1) according to any one of Claims 1 to 4, comprising an electrical protective element (16) arranged in a current path between the first control connection of the electromechanical switching element (10) and the first connection of a supply voltage.

6. Circuit arrangement for charging an electrical energy storage device (4) in an electric vehicle, comprising:
a charging connection (2) designed to be connected to an electrical energy source;
a charging circuit (3) designed to charge the electrical energy storage device (4) using a voltage provided at the charging connection (2);
a switching device according to any one of Claims 1 to 5,
wherein the electromechanical switching element (10) of the switching device (1) is arranged between a connection point of the charging connection (2) and the charging circuit (3).

7. Circuit arrangement according to Claim 6, wherein the charging circuit (2) comprises an electric machine (22) and an actuation circuit (21) for the electric machine (2);
and wherein the electromechanical switching element (10) of the switching device (1) is arranged between a connection point of the charging connection (2) and a star point of the electric machine (22).

8. Circuit arrangement according to Claim 6 or 7, wherein the charging connection (2) is designed to be connected to an electrical DC voltage source.

9. Method for actuating an electromechanical switching element (10) in a switching device (1) according to Claim 1, comprising the following steps:
receiving (S1) a request to close the electromechanical switching element (10); and
actuating (S2) the first semiconductor switching element (11) or the second semiconductor switching element (12) after a request to close the electromechanical switching element (10) has been received.

10. Method according to Claim 9, wherein an electric current for actuating the electromechanical switching element (10) and/or a temperature at the electromechanical switching element (10) and/or the charging circuit (2) is used to select whether the first semiconductor switching element (11) or the second semiconductor switching element (12) is to be actuated.

## Revendications

1. Dispositif de commutation (1) destiné à coupler une borne de charge (2) à un circuit de charge (3) pour charger un accumulateur d'énergie électrique (4), avec :
un élément de commutation électromécanique (10), qui est conçu pour ouvrir ou fermer un trajet de courant électrique entre un point de connexion de la borne de charge (2) et un point de connexion du circuit de charge (3) ;
un premier élément de commutation à semi-conducteurs (11) ;
un deuxième élément de commutation à semi-conducteurs (12) ; et
une résistance électrique (13),
l'élément de commutation électromécanique (10) comprenant une première borne de commande et une deuxième borne de commande, et la première borne de commande étant couplée à une première borne d'une tension d'alimentation,
le premier élément de commutation à semi-conducteurs (11) étant disposé entre une deuxième borne de la tension d'alimentation et la deuxième borne de commande de l'élément de commutation électromécanique (10), et
un circuit série composé du deuxième élément de commutation à semi-conducteurs (12) et de la résistance électrique (13) étant disposé entre la deuxième borne de la tension d'alimentation et la deuxième borne de commande de l'élément de commutation électromécanique (10).

2. Dispositif de commutation (1) selon la revendication 1, avec un système de commande (15), qui est conçu pour recevoir une demande de fermeture de l'élément de commutation électromécanique (10) et pour piloter le premier élément de commutation à semi-conducteurs (11) ou le deuxième élément de commutation à semi-conducteurs (12) pour fermer l'élément de commutation électromécanique (10).

3. Dispositif de commutation (1) selon la revendication 2, le système de commande (15) étant conçu pour déterminer une température sur l'élément de commutation électromécanique (10) et/ou le circuit de charge (3) et pour piloter soit le premier élément de commutation à semi-conducteurs (11), soit le deuxième élément de commutation (12) en utilisant la température déterminée.

4. Dispositif de commutation (1) selon la revendication 2 ou 3, le système de commande (15) étant conçu pour déterminer un courant électrique pour piloter l'élément de commutation électromécanique (10) et pour piloter soit le premier élément de commutation à semi-conducteurs (11) soit le deuxième élément de commutation à semi-conducteurs (12) en utilisant le courant électrique déterminé.

5. Dispositif de commutation (1) selon l'une des revendications 1 à 4, avec un élément de protection électrique (16), qui est disposé dans un trajet de courant entre la première borne de commande de l'élément de commutation électromécanique (10) et la première borne d'une tension d'alimentation.

6. Ensemble formant circuit pour charger un accumulateur d'énergie électrique (4) dans un véhicule électrique, avec :
une borne de charge (2), qui est conçue pour être reliée à une source d'énergie électrique ;
un circuit de charge (3), qui est conçu pour charger l'accumulateur d'énergie électrique (4) en utilisant une tension électrique fournie sur la borne de charge (2) ;
un dispositif de commutation selon l'une des revendications 1 à 5,
l'élément de commutation électromécanique (10) du dispositif de commutation (1) étant disposé entre un point de connexion de la borne de charge (2) et le circuit de charge (3).

7. Ensemble formant circuit selon la revendication 6, le circuit de charge (2) comprenant une machine électrique (22) et un circuit de pilotage (21) pour la machine électrique (2) ;
l'élément de commutation électromécanique (10) du dispositif de commutation (1) étant disposé entre un point de connexion de la borne de charge (2) et un point d'étoile de la machine électrique (22).

8. Ensemble formant circuit selon la revendication 6 ou 7, la borne de charge (2) étant conçue pour être reliée à une source de tension continue électrique.

9. Procédé pour piloter un élément de commutation électromécanique (10) dans un dispositif de commutation (1) selon la revendication 1, avec les étapes de :
réception (S1) d'une demande de fermeture de l'élément de commutation électromécanique (10) ; et
pilotage (S2) du premier élément de commutation à semi-conducteurs (11) ou du deuxième élément de commutation à semi-conducteurs (12) après réception d'une demande de fermeture de l'élément de commutation électromécanique (10).

10. Procédé selon la revendication 9, une sélection pour savoir si le premier élément de commutation à semi-conducteurs (11) ou le deuxième élément de commutation à semi-conducteurs (12) doit être piloté est effectuée en utilisant un courant électrique pour piloter l'élément de commutation électromécanique (10) et/ou une température sur l'élément de commutation électromécanique (10) et/ou le circuit de charge (2).
